# EUROPEAN PATENT SPECIFICATION

(11) **EP 2 721 325 B1**
(45) Date of publication and mention of the grant of the patent: **22.11.2017**
(21) Application number: 12733819.2
(22) Date of filing: 13.06.2012
(51) Int. Cl.: F16H 59/02

(54) **ATTACHMENT ASSEMBLY**
BEFESTIGUNGSANORDNUNG
ENSEMBLE DE FIXATION

(30) Priority: 15.06.2011 US 201161497461 P
(43) Date of publication of application: 23.04.2014
(73) Proprietor: KEY SAFETY SYSTEMS, INC., Sterling Heights, MI 48314 (US)
(72) Inventor: SPENCER, Byron, Bloomfield, Michigan 48301 (US)
(74) Representative: Gislon, Gabriele
(86) International application number: PCT/US2012/042156
(87) International publication number: WO 2012/174052

(56) References cited:
- EP-A2- 1 770 310
- WO-A1-02/01093
- DE-A1- 3 613 856
- DE-A1- 4 013 810
- GB-A- 2 253 446
- JP-A- 8 272 471

## Description

### Background and Summary of the Invention

The present invention relates to a novel way of attaching two elements together to preclude free play between these elements. The invention finds specific application in securing a shift knob to a shift lever, see for instance JP-A-08-272471, as well as securing a steering wheel to a steering shaft. The invention is applicable to many other product combinations.

In one embodiment, the invention comprises: a shift knob adapted to attach to a shift lever: wherein the shift lever has an engagement portion receivable into a passage of the shift knob. The engagement portion of the shift lever is generally cylindrically shaped, the engagement portion having: a center axis extending therethrough. A first portion of the engagement portion comprising a sloped first plane "A", intersecting the center axis, the first plane "A" sloping toward an outer surface of the engagement portion at a first angle "a", relative to the center axis and intersecting the exterior wall at a determinable first location; the engagement portion further includes a second sloped portion "B", the angle "b" of the second sloped portion being opposite in slope to the first angle A. The shift knob includes an engagement portion, which in one embodiment is configured as a housing, comprising another sloped surface "C", sloping at the same angle as the first plane A. The shift knob also includes a catch, configured to touch the second sloped portion at a predetermined angle so as to generate an axial component of force in a direction to urge the lever plane "A" and the shift knob plane "C" to move into contact with each other. The shift knob may include a spring that energizes the catch into engagement with the lever. The forces acting between the shift knob and the lever are orchestrated by this design concept to be in concert to remove free play in every direction. In another embodiment the invention is extendible to securing a steering wheel to a steering shaft. In general the invention can be used to secure to mating components together.

### Brief Description of the Drawings

Figure 1 diagrammatically illustrates the prior art shift knob 600 and shift lever 602 extending from a transmission casing 604.
Figure 2 illustrates some of the major components of the shift knob according to the present invention.
Figure 3 shows the shift knob and lever apart from each other.
Figure 4 shows assembly of the major portions of the present invention.
Figure 5 is a cross-sectional view through section 5-5 of Figure 3.
Figure 6 is a plan view showing an entry bore in a housing part.
Figure 7 shows another cross-sectional view of the present invention.
Figure 8 shows an alternate embodiment of the invention.
Figures 9 and 10 show generalized views of the present invention.
Figure 11 applies the invention for use in connecting a steering wheel to a steering shaft.

### Detailed Description of the Drawings

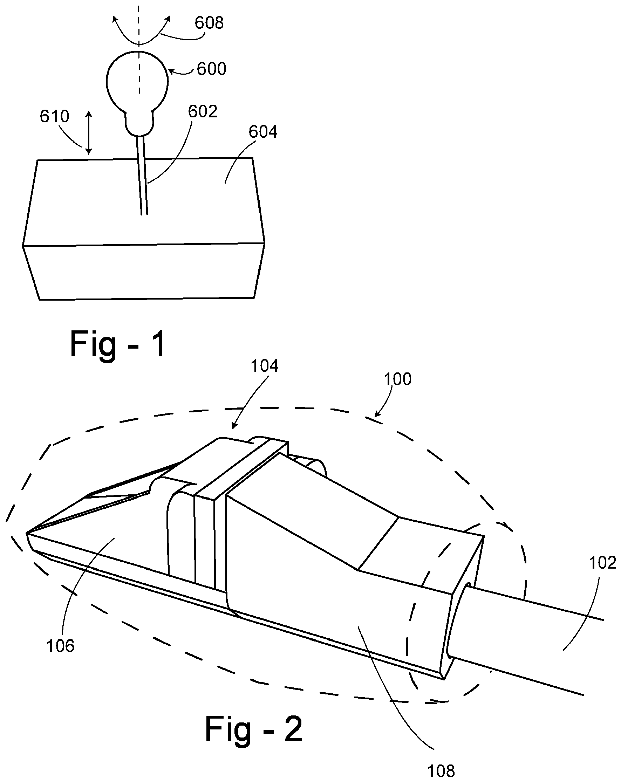

Figure 1 illustrates the prior art shift knob 600 coupled with a shift lever 602, the lever extending from a transmission casing 604. Shift knobs will have a locking mechanism enabling the shift knob to be inserted upon a lever and snapped in place. Occasionally, primarily due to the stack-up of tolerances, the shift knob may be loose or become loose so that the shift lock can be rotated back or forth such as in the directions of arrow 606 or moved up and down in the directions of arrow 608 or rocked from top to bottom in the directions of arrows 610. It is the goal of the present invention to correct these matters.

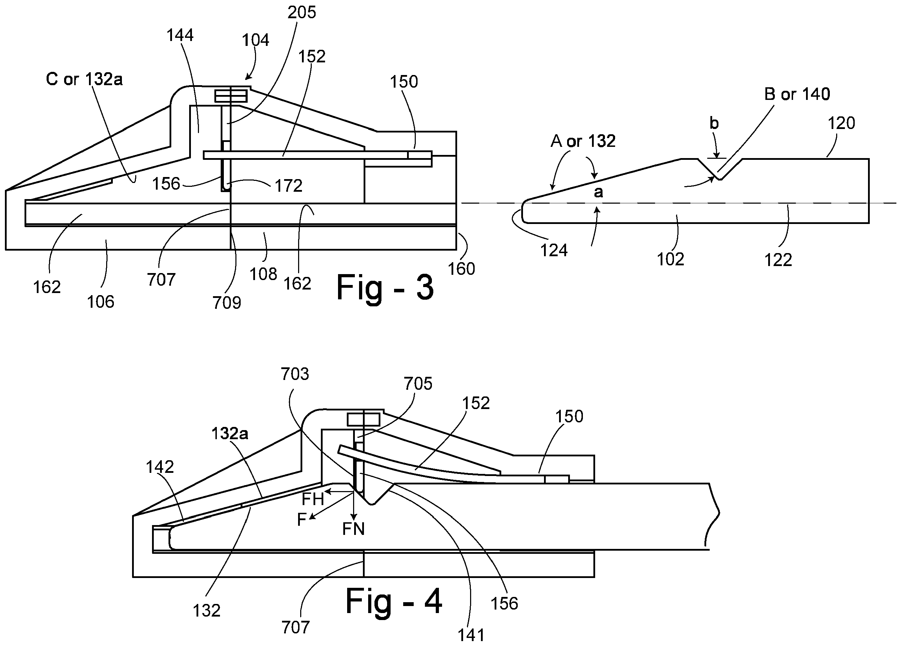

Figure 2 illustrates some of the major components of the present invention, more particularly a shift knob 100 engaged with a shift lever 102. The shift knob 100 includes a housing 104 having a first part 106 and a second part 108. These housing parts 106 and 108 include means by which they can be aligned and fastened together. Figure 3 illustrates lever 102 apart from housing 104. Shift lever 102 is basically cylindrical in shape having an exterior wall 120, a central axis 122 and an end 124. The lefthand portion of the lever 102 is also referred to as the engagement end or portion 130. The top end 132 is formed with a chamfer, also referred to as a first sloping surface or planar surface 132. This planar surface 132 preferably extends below axis 122. The lever 102 further includes a second sloping surface 140 that slopes toward the center axis. The angle of the second surface 140 is larger than the angle of the planar surface 132 and opposite that of the first sloping surface. In the preferred embodiment of the invention the angle of this first sloping surface relative to axis 122 is less than 45° (15° in this embodiment) while the angle of the second sloping surface is greater than 30° (45° in this embodiment) and slopes oppositely from the direction of the first sloping surface. The angles of these surfaces are chosen to provide the desired low assembly force and high retention force while at the same time permitting repeatable disassembly and reassembly without need of tools.

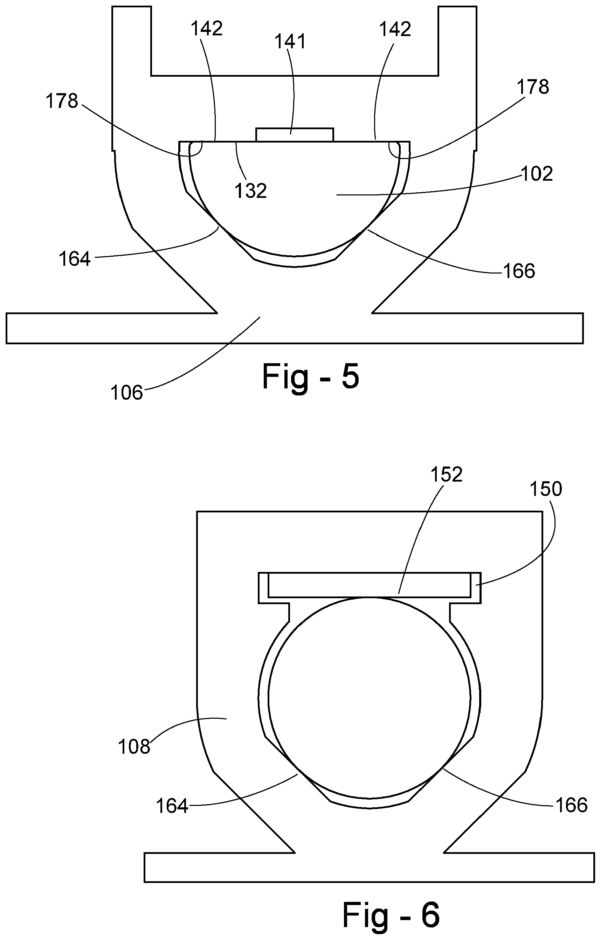

As shown in Figures 3 and 4, housing member 106 includes an interior sloped surface 132a having a complementary angle to the first sloped surface 132 of lever 102. This sloped surface 132a is offset away from engagement with sloped surface 132 along its axial center line such that only the most radial parts 142 of surface 132a engage surface 132. The offset is shown by numeral 141 and is generally convex in shape (arcuate or rectangular). The centerline relief offered by 142 relative to surface 132a can be seen from figure 5. Housing 106 includes a hollow space 144 facing housing member 108 that serves to provide clearance for spring 152 to move unimpeded. Housing member 108 includes a slot 150 to receive a flat spring 152 having an opening 154. Spring 152 biases plate or catch 156 downwardly; plate or catch 156 includes a projection 158 received through opening 154. Projection 158 and opening 154 work together as a loose hinge between plate or catch 156 and spring 152 so that the spring does not disengage from the plate and so that its working length is relatively unaffected by deflection of the plate, while it is still free to slide and thus avoid excessively loading the plate 156 other than radially to the lever's axis 122. Plate 156 is positioned axially by mating face 709 of housing 108. This face 709 co-locates axially with mating face 707 of housing 106 and the axial distance from this face to the profile of surface 132a can be precisely controlled. Likewise the axial distance along lever 102 between planar surface 132 and planar surface 140 can be precisely controlled to ensure that plate or catch 156 engages in the axial middle of planar surface 140. During assembly, face 703 axially locates the plate 156 and ensures that it climbs the first surface A or 132 and drops onto the second surface B or 140.

Reference is again made to figures 3 and 4 and to surface 140. In the embodiment illustrated in figure 2 the lever 102 includes an oppositely sloped surface 141 having a mirror orientation of surface 140, however the position and orientation of this surface serves only to provide adequate clearance to the proper function of parts heretofore mentioned. Housing member 108 includes an end face 160; and both housing members include an axial bore 162 having the shape as illustrated in Figures 5 and 6. Housing member 108 also includes a flat mating face 709 which mates with face 707. After the catch and spring 152 are inserted in housing member 108, the housing members 106 and 108 are joined together along the mating lines of surfaces 707 and 709. The housing members can be heat bonded, welded, glued, etc. More particularly, the walls of bore 162 include two straight angular surfaces 164 and 166, each of which is approximately in the range of 30° - 60° (45° preferred). These surfaces 164 and 166 are discontinuous between housing member 106 and housing member 108 so as to form two axially spaced "V" shaped cradles for lever 102. Elsewhere away from these surfaces 164 and 166 clearance is provided between the lever 102 and the two housing members except where surface 140 is in contact and the tail of the spring 150 contacts both the housing member 108 at line 701 and lever 102 at point 702. When the lever 102, which is preferably a circular cylinder, is being inserted through these bores, the lever only contacts surfaces 164 and 166 of the housing members until it fully seats upon and is positioned by surface 132a (including ends 142). As can be appreciated, the engagement of surface 130 and 132a correctly angularly orientates lever 102 with the housing 106. This minimum but sufficient contact between the lever and the other parts of the assembly reduces stack-up of tolerances that may occur in the fabrication of the shift knob and lever and uniquely positions any lever with respect to any shift knob thus eliminating free play and in any direction.

When the lever 102 is initially inserted through bore 162 the first sloped surface 132 will engage the bottom 172 of catch 156, lifting same against the bias force of spring 152. Further insertion of lever 102 places opposing sides 178 of the flat surface 132 into engagement with the bottoms 176 of surfaces 142 of planar surface 132a. These radial contacts correctly orientate lever 102 angularly within the housing 104; further, in this configuration the bottom 172 of catch 156 creates a force F which is generally perpendicular to surface 140. As can be appreciated force F generates a horizontal component FH which further urges the lever into housing 104 and a normal component FN urging the lever 102 downwardly against surfaces 162 and 164.

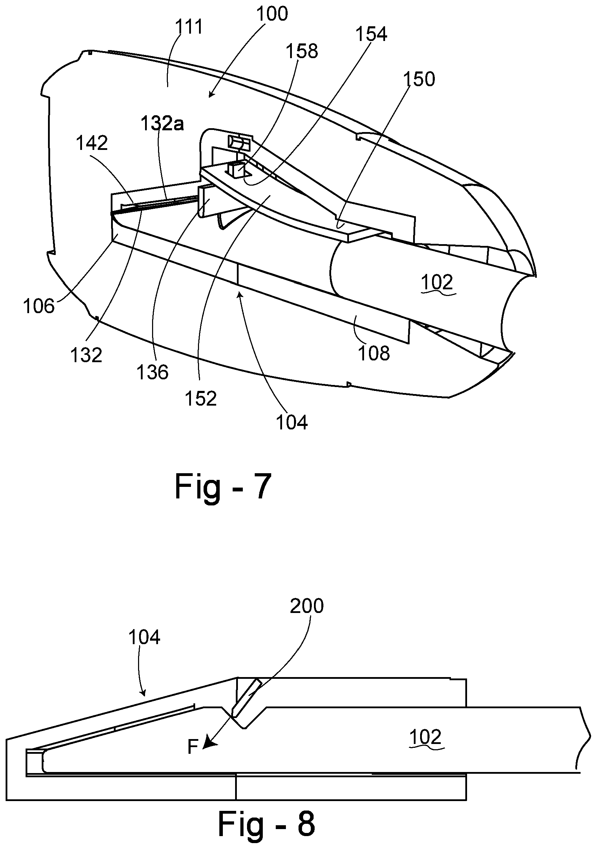

Reference is again briefly made to figure 7, which shows an orthogonal representation of the above identified parts. Additionally, shift knob cover 111 has been molded about housing 104. Utilizing a narrow angle (a) of surface 132 permits the knob 100 to be seated upon shaft 102 with a predetermined small force. However in the reverse direction on removal of the lever, utilization of the sharper angle (b) or surface140 requires that a significantly larger force is needed to remove the shift knob 100 from lever 102.

Reference is briefly made to figure 8. In figure 8, the catch 152 and spring 155, mentioned above, are eliminated and replaced with a set screw 200. The set screw 200 generates force F which tends to hold the housing 104 and shaft together.

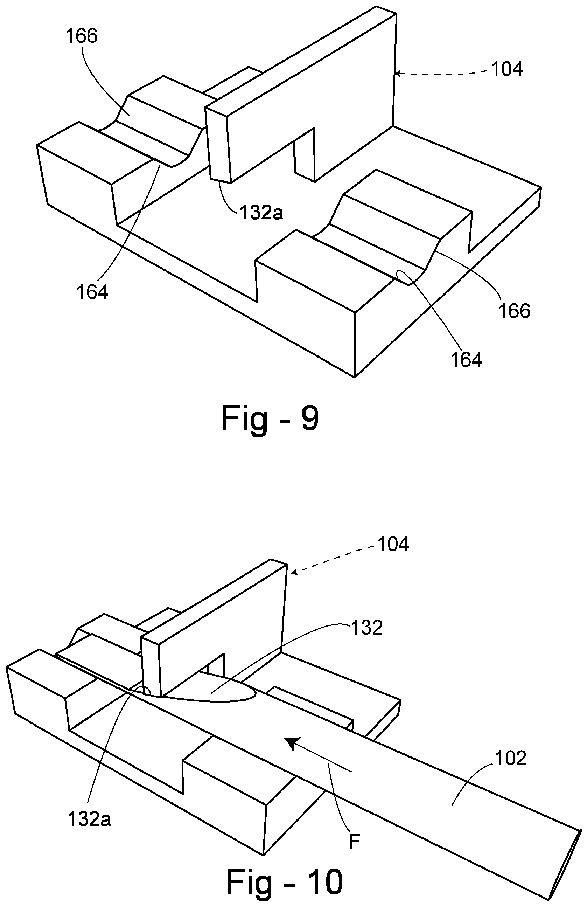

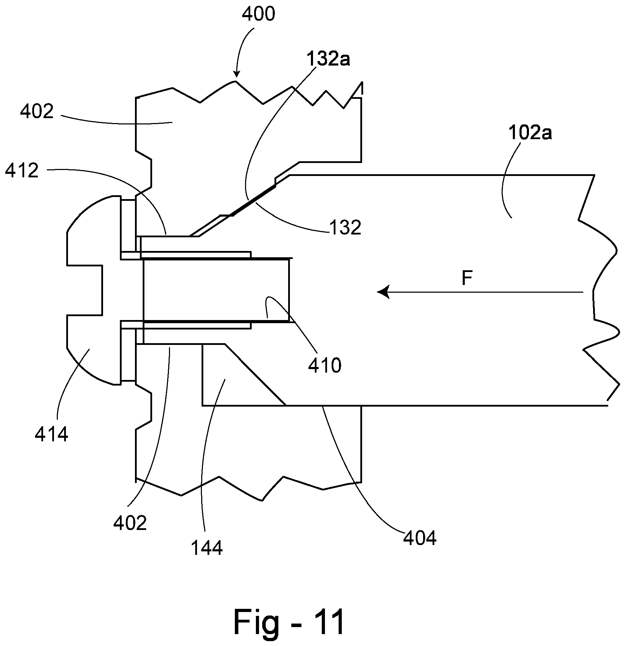

Reference is briefly made to figures 9 and 10 which emphasize the relationship of the various interfacing surfaces divorced from a particular part. If any part or parts maintain the above described relationships this holding and alignment mechanism can hold these parts together. In the context of figures 9 and 10, numeral 104 (in dotted line) is used to show that these features are formed on some arbitrary member. What is not shown in figure 10 is a means for generating the holding force. In the first embodiment of the invention the spring and catch were used. In the next embodiment a set screw was used. Figure 11 shows the mechanism of figure 9 and 10 realized as a means for connecting a steering wheel to a steering shaft 102a. The steering shaft 102a is received in the hub 400 of the steering wheel 402. The hub 400 includes surface 132a and edges or ends 142 as shown above. The hub in location 404 includes the angled surfaces 164 and 166 shown in figure 6. The hub in location 402 includes the angled surfaces 164 and 166 shown in figure 5. Shaft 102a includes a threaded bore 410 and the hub includes an aligned opening 412. Fastener 414 creates the clamping or compressive force F causing the hub 400 and shaft 102a to be drawing together.

Many changes and modifications in the above-described embodiment of the invention can, of course, be carried out without departing from the scope thereof. Accordingly, that scope is intended to be limited only by the scope of the appended claims.

## Claims

1. A device comprising a first member (104) adapted to attach to a second member (102):
wherein the second member has an engagement portion receivable into a passage of the first member, the engagement portion being generally cylindrically shaped,
the engagement portion having:
a center axis (122), a first portion comprising a sloped first plane (132) intersecting the center axis, the first plane sloping toward an outer surface of the second member at a first angle, relative to the center axis and intersecting the outer surface at a determinable first location; **characterized by**:
a mechanism (152, 156) is provided to urge the second member into the first member, wherein the two members attach together to preclude free play in every direction.

2. The device according to claim 1 wherein the engagement portion further includes a second sloped portion oriented at a second angle, the second sloped portion being opposite in slope to the first angle.

3. The device according to claim 2 wherein the engagement portion further includes a spring loaded catch, the catch configured to impact the second sloped portion at a predetermined angle to generate an axial component of force in a direction to urge the second member and first member to move into and remain engaged with one another.

4. The device according to claim 1 wherein the first member is one of a shift knob (100) or steering wheel (402) and the second member is a shift lever (102) or steering column.

5. The device according to claim 2 wherein the first member at a far end of a passage proximate the location of the first portion including a second portion angled in a complementary manner to the first portion, the second portion engaging the first portion to orient the first portion at a preferred radial orientation about the center axis.

6. A device according to claim 1, further **characterized by**:
the engagement portion including a second sloped portion oriented at a second angle, the second sloped portion being opposite in slope to the first angle, the mechanism to urge the second member into the first member being a spring loaded catch (156), the catch configured to impact the second sloped portion at a predetermined angle to generate an axial component of force in a direction to urge the second member and first member to move into and remain engaged with one another.

7. The device according to claim 6 wherein the first member is one of a shift knob (100) or steering wheel (402).

8. The device according to claim 6 wherein the second member is a lever or shaft (102).

9. The device according to claim 8 wherein the mechanism includes a spring loaded catch (156), the plate configured to impact the second sloped portion at a predetermined angle to generate an axial component of force in a direction to urge the first member and shift lever (102) to move into and remain engaged with one another.

## Patentansprüche

1. Vorrichtung umfassend ein erstes Glied (104), welches zum Befestigen an einem zweiten Glied (102) ausgebildet ist;
wobei das zweite Glied einen Eingriffsabschnitt aufweist, welcher in einem Durchgang des ersten Glieds aufnehmbar ist, wobei der Eingriffsabschnitt im Wesentlichen eine zylindrische Form aufweist, wobei der Eingriffsabschnitt umfasst:
eine zentrale Achse (122),
einen ersten Abschnitt, welcher eine erste geneigte Ebene (132) umfasst, welche die zentrale Achse schneidet, wobei die erste Ebene zu einer Außenfläche des zweiten Glieds hin um einen ersten Winkel relativ zur zentralen Achse geneigt ist und die Außenfläche an einer vorbestimmbaren ersten Stelle schneidet;
**dadurch gekennzeichnet, dass**
ein Mechanismus (152, 156) bereitgestellt ist, um das zweite Glied in das erste Glied zu drücken, wobei die zwei Glieder aneinander befestigt sind, um ein Spiel in allen Richtungen zu vermeiden.

2. Vorrichtung nach Anspruch 1, wobei der Eingriffsabschnitt ferner einen zweiten geneigten Abschnitt umfasst, welcher um einen zweiten Winkel geneigt ist, wobei der zweite geneigte Abschnitt eine dem ersten Winkel entgegengesetzte Neigung aufweist.

3. Vorrichtung nach Anspruch 2, wobei der Eingriffsabschnitt ferner einen federbelasteten Riegel umfasst, wobei der Riegel konfiguriert ist, um auf den zweiten geneigten Abschnitt in einem vorbestimmten Winkel aufzutreffen, um eine axiale Kraftkomponente in einer Richtung zu erzeugen, welche das zweite Glied und das erste Glied dazu zwingt, sich ineinander zu bewegen und miteinander in Eingriff zu bleiben.

4. Vorrichtung nach Anspruch 1, wobei das erste Glied eines von einem Schaltknopf (100) oder einem Lenkrad (402) ist und das zweite Glied ein Schalthebel (102) oder die Lenksäule ist.

5. Vorrichtung nach Anspruch 2, wobei das erste Glied am fernen Ende eines Durchgangs, welcher zu der Position des ersten Abschnitts proximal ist, einen zweiten Abschnitt umfasst, welcher komplementär zum ersten Abschnitt geneigt ist, wobei der zweite Abschnitt mit dem ersten Abschnitt eingreift, um den ersten Abschnitt mit einer bevorzugten radialen Ausrichtung um die zentrale Achse auszurichten.

6. Vorrichtung nach Anspruch 1, ferner **dadurch gekennzeichnet, dass**:
der Eingriffsabschnitt einen zweiten geneigten Abschnitt umfasst, welcher in einem zweiten Winkel ausgerichtet ist, wobei der zweite geneigte Abschnitt eine zum ersten Winkel entgegengesetzte Neigung aufweist,
wobei der Mechanismus zum Drücken des zweiten Glieds in das erste Glied aus einem federbelasteten Riegel (156) besteht, wobei der Riegel konfiguriert ist, um auf den zweiten geneigten Abschnitt in einem vorbestimmten Winkel aufzutreffen, um eine axiale Kraftkomponente in einer Richtung zu erzeugen, welche das zweite Glied und das erste Glied dazu zwingt, sich ineinander zu bewegen und miteinander in Eingriff zu bleiben.

7. Vorrichtung nach Anspruch 6, wobei das erste Glied eines von einem Schaltknopf (100) oder einem Lenkrad (402) ist.

8. Vorrichtung nach Anspruch 6, wobei das zweite Glied ein Hebel oder eine Welle (102) ist.

9. Vorrichtung nach Anspruch 8, wobei der Mechanismus einen federbelasteten Riegel (156) umfasst, wobei die Platte konfiguriert ist, um auf den zweiten geneigten Abschnitt in einem vorbestimmten Winkel aufzutreffen, um eine axiale Kraftkomponente in einer Richtung zu erzeugen, welche das erste Glied und den Schalthebel (102) dazu zwingt, sich ineinander zu bewegen und miteinander in Eingriff zu bleiben.

## Revendications

1. Dispositif comprenant un premier élément (104) adapté pour être fixé sur un deuxième élément (102) ;
dans lequel le deuxième élément comporte une partie d'engagement pouvant être reçue dans un passage du premier élément, la partie d'engagement ayant une forme généralement cylindrique ;
la partie d'engagement comportant :
un axe central (122) ; une première partie comprenant un premier plan incliné (132) coupant l'axe central, le premier plan étant incliné vers une surface externe du deuxième élément à un premier angle par rapport à l'axe central et coupant la surface externe au niveau d'un premier emplacement pouvant être déterminé ;
**caractérisé en ce que** :
un mécanisme (152, 156) est prévu pour pousser le deuxième élément dans le premier élément, les deux éléments étant fixés l'un à l'autre pour empêcher un jeu libre dans chaque direction.

2. Dispositif selon la revendication 1, dans lequel la partie d'engagement inclut en outre une deuxième partie inclinée orientée à un deuxième angle, la deuxième partie inclinée ayant une inclinaison opposée au premier angle.

3. Dispositif selon la revendication 2, dans lequel la partie d'engagement inclut en outre un cliquet chargé par ressort, le cliquet étant configuré pour heurter la deuxième partie inclinée à un angle prédéterminé pour produire une composante de force axiale dans une direction, afin d'entraîner le déplacement du deuxième élément et du premier élément l'un dans l'autre et de maintenir leur engagement l'un dans l'autre.

4. Dispositif selon la revendication 1, dans lequel le premier élément est constitué par un pommeau de changement de vitesse (100) ou un volant de direction (402), le deuxième élément étant un levier de changement de vitesse (102) ou une colonne de direction.

5. Dispositif selon la revendication 2, dans lequel le premier élément inclut, au niveau d'une extrémité éloignée d'un passage proche de l'emplacement de la première partie, une deuxième partie inclinée de manière complémentaire à la première partie, la deuxième partie s'engageant dans la première partie pour orienter la première partie au niveau d'un orientation radiale préférée autour de l'axe central.

6. Dispositif selon la revendication 1, **caractérisé en outre en ce que** :
la deuxième partie d'engagement inclut une deuxième partie inclinée orientée à un deuxième angle, la deuxième partie inclinée ayant une inclinaison opposée au premier angle ;
le mécanisme destiné à pousser le deuxième élément dans le premier élément est un cliquet chargé par ressort (156), le cliquet étant configuré pour heurter la deuxième partie inclinée à un angle prédéterminé pour produire une composante de force axiale dans une direction afin d'entraîner le déplacement du deuxième élément et du premier élément l'un dans l'autre de maintenir leur engagement l'un dans l'autre.

7. Dispositif selon la revendication 6, dans lequel le premier élément est un pommeau de changement de vitesse (100) ou un volant de direction (402).

8. Dispositif selon la revendication 6, dans lequel le deuxième élément est un levier ou un arbre (102).

9. Dispositif selon la revendication 8, dans lequel le mécanisme inclut un cliquet chargé par ressort (156), la plaque étant configurée pour heurter la deuxième partie inclinée à un angle prédéterminé pour générer une composante de force axiale dans une direction afin d'entraîner le déplacement du premier élément et du levier de changement de vitesse (102) l'un dans l'autre et maintenir leur engagement l'un dans l'autre.
